# EUROPEAN PATENT APPLICATION

(11) **EP 2 221 686 A2**
(43) Date of publication of application: **25.08.2010**
(21) Application number: 10151659.9
(22) Date of filing: 26.01.2010
(51) Int. Cl.: G05B 19/05

(54) **Industrial controller for synchronization control**

(30) Priority: 02.02.2009 JP 2009022045; 30.11.2009 JP 2009272439
(71) Applicant: Omron Co., Ltd., Kyoto-shi, Kyoto 600-8530 (JP)
(72) Inventor: Izumi, Toshiro, Kyoto-shi, Kyoto 600-8530 (JP)
(74) Representative: Wilhelms · Kilian & Partner Patentanwälte

(57) **Abstract**

This invention realizes a synchronization control function without providing a bus dedicated for synchronization control by using a bus (system bus) used to transmit and receive data between units from the prior art. When a timer interruption occurs during the execution of a process performed in a normal cyclic, a CPU unit interrupts the process and transmits synchronization data by collective addressing using the system bus to other synchronisation units performing the synchronization control. The synchronization unit executes a synchronization cycle upon the reception of the synchronization data by collective addressing as a trigger, acquires the received synchronization data with the start of the synchronization cycle, and performs a refresh process of the synchronization data of IN data after executing an input/output process. The CPU unit performs the refresh process of the synchronization data of the IN data, and obtains the synchronization data to be transmitted next by a synchronization interrupts task process. The synchronization unit constantly acquires the most recent synchronization data and simultaneously operates.

## Description

### BACKGROUND OF THE INVENTION

This application is based on Japanese Patent Application No. 2009-022045 filed with the Japan Patent Office on February 2, 2009, and Japanese Patent Application No. 2009-272439 filed with the Japan Patent Office on November 30, 2009, the entire content of which is hereby incorporated by reference.

### 1. TECHNICAL FIELD

The present invention relates to an industrial controller.

### 2. RELATED ART

in a network system of an FA (Factory Automation), one or more PLC (Programmable Logic Controller) controlling an input device and an output device in a production facility, and a device which operation is controlled by the PLC are connected by a network of the control system. The PLC device cyclically communicates through the network of the control system to transmit and receive the IN data and the OUT data (hereinafter referred to as I/O data), and control the production facility.

The PLC is configured by combining a plurality of units such as a CPU unit for executing calculation based on a control program, an input unit for connecting an input device such as a sensor and a switch and retrieving the ON/OFF signal thereof as an input signal, an output unit for connecting an output device such as an actuator and a relay and sending an output signal thereto, a communication unit for transmitting and receiving data with another device connected to the network, a master unit for performing a master slave communication, and a power supply unit for supplying power to each unit. Such units are electrically connected by a system bus, so that data is transmitted and received among predetermined units through the system bus.

In the control in the CPU unit, the signal input to the input unit is retrieved to the I/O memory of the CPU unit (IN refresh), the logical calculation is carried out based on the user program incorporated in the user program description language (e.g., ladder language) registered in advance (calculation execution), the calculation execution result is written to the I/O memory and sent to the output unit (OUT refresh), and thereafter, a so-called peripheral process is performed, which processes are cyclically and repeatedly carried out.

The units configuring the PLC include a special unit for performing special calculations and controls. There are various types of special units such as a process control unit having a function of receiving an analog value such as a temperature and implementing a dedicated process control (analog control) program such as performing a PID control, a motion control unit for performing motion control, and the like. The motion control unit can drive control a plurality of motors, and the application thereof includes controlling the positioning of an object of the drive system with the drive axes of a plurality of motors as the directions (three directions of left and right, front and back, up and down) of three axes (so-called X-axis, Y-axis, Z-axis).

This type of special unit is normally mounted with a user program, so that each special unit individually performs the execution of the user program, the I/O refresh, the peripheral process, and the like in a cyclic manner apart from the cyclic control in the CPU unit. There is a demand to synchronously control the operation of the device controlled by each special unit. In other words, the device configured with a mechanical mechanism is recently being replaced to an electronic operation. This is because advancement is being made to computerization in which change of software and check by data are easy as maintenance is troublesome and changes and fine tuning are difficult in the mechanical mechanism. For instance, in the case of a prior art where one shaft (main shaft) is linked with a different shaft (driven shaft) using a gear or a cam, and each shaft (driven shaft) is moved in cooperation with the movement of the shaft of the main shaft, the shape of the cam needs to be changed or the gear ratio needs to be changed to change the timing of operation of the driven shaft with respect to the movement of the shaft of the main shaft, which is troublesome. Thus, different drive motors and other drive devices are coupled to the shaft of the main shaft or each drive shaft, and the operation timing of the drive device is adjusted, so that the linkage operation of the shaft (main shaft) and each shaft (driven shaft) by the mechanical mechanism can be pseudo-reproduced. The case of changing the timing of the operation of the driven shaft with respect to the movement of the shaft of the main shaft then can be easily responded.

In order perform such synchronization control, the synchronization of the special unit for performing the control of the shaft (main shaft) and each shaft (driven shaft) needs to be taken. The technique of taking synchronization includes an invention disclosed in Japanese Unexamined Patent Publication No. 2005-293569. In the invention disclosed in Japanese Unexamined Patent Publication No. 2005-293569, the units are connected with a synchronization dedicated bus for transmitting a synchronization signal different from the system bus for transmitting and receiving data, the CPU unit transmits the synchronization signal to each special unit through the synchronization dedicated bus, and each special unit performs the calculation execution for one cycle with the reception of the synchronization signal sent through the synchronization dedicated bus as a trigger. The transmission and reception of the actual IO data and the like are performed through the system bus.

### SUMMARY

In the invention of Japanese Unexamined Patent Publication No. 2005-293569, the cycles of the cycle master module and each motion control module can be synchronized. However, the cost becomes high since the synchronization dedicated bus needs to be separately arranged apart from the system bus, and furthermore, an existing hardware configuration that does not include the synchronization dedicated bust cannot be used.

In accordance with one aspect of the present invention, an industrial controller is configured with a plurality of units for performing synchronization control, wherein one of the plurality of units is configured to perform as a cycle master for performing a control, to match an execution timing of the synchronization; the cycle master has a function of executing, a process of transmitting synchronization data by collective addressing using a system bus used in message transmission and IO data transmission to the other units performing the synchronization control according to a timer interruption, apart from a process performed in a normal cyclic, and a preparation process for next collective addressing after acquiring the synchronization data of IN data of the other units and executing an interrupt task process based on the synchronization data; and the other units performing the synchronization control are configured to execute a synchronization cycle upon the reception of the synchronization data by collective addressing transmitted from the cycle master as a trigger, acquire the transmitted synchronization data with the start of the synchronization cycle, perform a refresh process of the synchronization data of the IN data after executing an input/output process, perform a cyclic process including a calculation process based on the received synchronization data, and output the calculation process result after the reception of the synchronization data by the next collective addressing. The "acquisition of the synchronization data of the IN data of other units" executed by the cycle master corresponds to the "synchronization data refresh process" in the embodiment. The industrial controller is various types of controllers, control devices used in the PLC and other FA.

In the present invention, the synchronization control can be performed with an easy means using a versatile serial bus without using a bus dedicated for synchronization. When performing the synchronization control, the CPU unit transmits the synchronization data by collective addressing (multicast) at a predetermined timing. The transmission of the synchronization data by collective addressing also uses the conventional synchronization start signal, and thus each unit that received the relevant synchronization data starts the synchronization cycle. Since each unit executes the respective process based on the received synchronization data, simultaneity can be ensured and the synchronization control can be performed among the units at the same timing. Thus, as the synchronization cycle starts in each unit based on the transmission process of the synchronization data by collective addressing, the synchronization signal (synchronization start signal) for matching the synchronization cycle does not need to be transmitted as in the prior art, the bus dedicated for synchronization is not necessary, and the synchronization control is executed with a communication using a versatile system bus for transmitting data. Furthermore, since each unit also executes the input/output process as well as the refresh process of the synchronization data at the beginning of the start of synchronization control, the synchronization data of the IN data is updated to the most recent data by the refresh process. The most recent synchronization data (IN) of each unit is collected by the cycle master through the process of acquiring the synchronization data of the IN data in the cycle master to be subsequently performed. The most recent synchronization data is reflected on the transmission of the synchronization data by the next collective addressing, and hence the cycle master and each unit can always execute each process based on the most recent synchronization data.

The other units performing the synchronization control operate to complete up to the synchronization data refresh process within a time period set in advance after the start of the synchronization cycle, and the cycle master resumes the process performed in the normal cycle after the process of transmitting the synchronization data by collective addressing and executes the process of acquiring the synchronization data of the IN data by the interrupt process after elapse of a reference time set to be greater than or equal to the reference time after receiving the timer interruption. The time A is 1/4 of the synchronization cycle time in the embodiment, but may obviously bet set to other times. The present invention is preferable as the cycle master controls the start timing of the "process of acquiring the synchronization data of the IN data" performed after the transmission of the synchronization data by collective addressing with time, and thus the complete notification from each unit does not need to be monitored, and the process performed in the normal cyclic can be executed in the meantime.

The synchronization data to be transmitted by the cycle master may include OUT data as a command value; and the interrupt process based on the acquired synchronization data includes a calculation of the command value based on the synchronization data of the acquired IN data. In the present invention, the command value of the process executed by each unit is calculated by the cycle master, and each unit performs the synchronization control based on the received command value.

The synchronization control may include controlling the operation of one or more driven shafts in accordance with the operation of a main shaft. This type of synchronization control includes an electronic shaft that acts the same as a roll connected to a gear box with speed changing function, and an electronic cam that acts similar to a mechanical cam.

The cycle master may be a CPU unit for comprehensively controlling the entire industrial controller. In the present invention, the cycle master may be a unit other than the CPU unit.

The cycle master may have a function of sending a synchronization stop command along with the synchronization data by collective addressing; and the other units stop the synchronization control when receiving the synchronization stop command. The synchronization stop command may be made to all units performing the synchronization control, or may be made to some units. Thus, a predetermined unit performing the synchronization control can chancel the synchronization control after the activation and perform an asynchronous control, whereby a flexible and appropriate control can be performed according to the state of the system.

The present invention realizes a synchronization control function without providing a bus dedicated for synchronization control by using a bus (system bus) used to transmit and receive data between units from the prior art. Furthermore, the simultaneity of the executing cycle of each unit can be ensured, and the synchronization control can be performed based on the most recent data.

### BRIEF DESCRIPTION OF THE DRAWINGS

Fig. 1 is a view showing one preferred embodiment of the present invention;
Fig. 2 is a view describing the functions of each unit;
Fig. 3 is a view showing a flow until outputting the OUT data from the IN data;
Fig. 4 is a view describing a specific data flow; and
Fig. 5 is a view describing a synchronization stop function.

### DETAILED DESCRIPTION

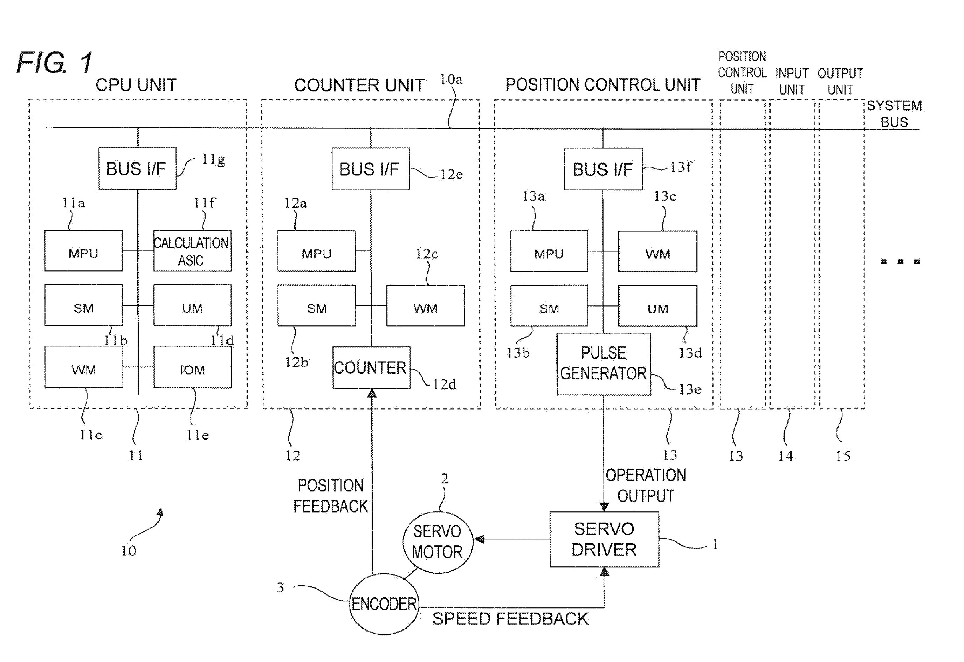

As shown in Fig. 1, a PLC 10 of the present embodiment is a building block type configured by coupling a plurality of units. In the figure, the plurality of units include at least one CPU unit 11, and also include a counter unit 12 serving as a special unit, and a position control unit 13. The PLC 10 also includes an input unit 14, an output unit 15, and a normal unit such as a power supply unit and a communication unit (not shown). Each such unit is electrically connected by connecting the connector arranged at the side surface of the connector. This connection connects each unit with a system bus 10a, so that data can be transmitted and received between the units.

The special unit cyclically executes a series of processes such as calculation process, IO refresh, common process, and peripheral service. Instead of being interposed between the connected IO device such as the input unit and the output unit and the CPU unit and performing a simple process such as exchange of IO data, the special unit has a function of cyclically executing a predetermined calculation process and controlling the operation of the output device to which it is connected. Thus, the special unit is sometimes referred to as a high function and the like. The calculation process may include executing a program set in advance, or executing a user program.

The CPU unit 11 includes an MPU 11a, a system memory 11b, a work memory 11c, a user memory 11d, an IO memory 11e, a calculation ASIC 11f, and a bus interface 11g. The CPU 11a is a microprocessor unit for the CPU unit, and comprehensively controls the entire PLC by executing the system program stored in the system memory 11 b. One part of the user program stored in the user memory 11d may be executed.

The system memory 11b is a non-volatile memory for storing the system program for the CPU unit. The work memory 11c is a memory used as a work when the MPU 11a operates, and is implemented by RAM, and the like. The user memory 11d is a memory for storing a program (user program) created by the user to operate the PLC and control the external device. The IO memory 11e stores data acquired from the external device through the input unit 14, and stores data output to the external device through the output unit 15 as an execution result of the user program. The IO memory 11e also stores parameters and the like defining the operation of the CPU unit 11. Such memories are drawn partitioned to separate blocks according to the function, but a plurality of memories may be assigned to different addresses of the physically same memory in the actual device.

The calculation AISC 11f is an ASIC for executing the user program stored in the user program 11d. The bus interface 11g is an interface with the system bus 10a.

The counter unit 12 includes an MPU 12a, a system memory 12b, a work memory 12c, and a counter 12d. The MPU 12a controls the counter unit 12 by executing the system program stored in the system memory 12b. The system memory 12b is a non-volatile memory for storing the system program for the counter unit. The work memory 12c is a memory used as a work when the MPU 12a operates, and is implemented by RAM, and the like. The counter 12d has a function of counting the pulses from the external device (e.g., encoder 3 for outputting the pulse for every predetermined angle with the rotation of the output shaft of the servo motor 2). The bus interface 11g is an interface with the system bus 10a.

The position control unit 13 includes an MPU 13a, a system memory 13b, a work memory 13c, a user memory 13d, a pulse generator 13e, and a bus interface 13f. The MPU 13a controls the position control unit 13 by executing the system program stored in the system memory 13b. The MPU 13a sometimes executes one part of the user program stored in the user memory 13d. The system memory 13b is a non-volatile memory for storing the system program for the position control unit. The work memory 13c is a memory used as a work when the MPU 13a operates, and is implemented by RAM, and the like. The user memory 13d is a memory for storing the program (user program) created by the user to operate the position control unit 13 and control the external device. The pulse generator 13e has a function of outputting an operation output signal to the external device (e.g., servo driver 1). The bus interface 3f is an interface with the system bus 10a.

The hardware configuration itself for configuring each unit is similar to those of the prior art. In the present embodiment, the CPU unit 11, and the counter unit 12 and the position control unit 13, which are special units, perform the inter-unit synchronization control. The synchronization signal is sent using the system bus 10a. In performing the synchronization control, a unit functioning as a master that emits the synchronization signal is required, and the CPU unit carries out the same in the present embodiment.

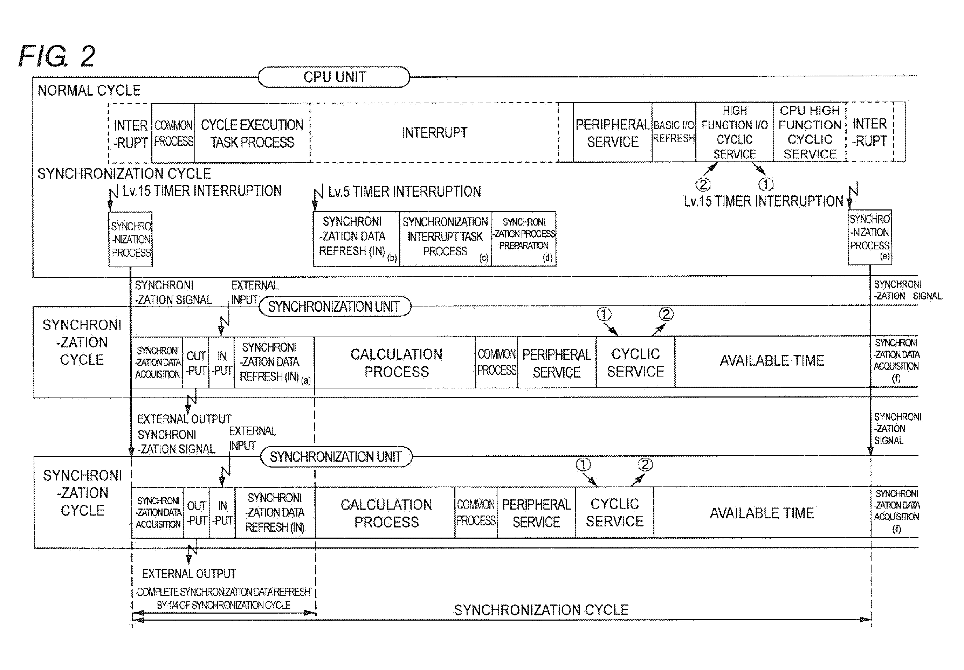

As shown in Fig. 2, a synchronization cycle that operates separate from the cyclic normal cycle process is prepared for the operation of the unit (CPU 11 herein) that is a cycle master. In the normal cycle, the common process, the cycle execution task process, the peripheral service process, the I/O refresh process, and the like are repeatedly executed, similar to the CPU unit of the existing PLC. In Fig. 2, "basic I/O refresh", "high function I/O cyclic service", and "CPU high function cyclic service" are shown as an example of the I/O refresh process. In the "basic I/O refresh", data exchange is carried out with the input unit 14 and the output unit 15 called the basic I/O unit. In the "high function I/O cyclic service" and the "CPU high function cyclic service", data exchange is carried out with the special unit called the high function I/O unit and the CPU high function unit, respectively. The data exchange with another unit performed in the I/O refresh process of the normal cycle is non-synchronously executed. The non-synchronous execution means not cooperating with the cyclic service executed in the synchronization cycle of the synchronization unit. On the other hand, the process of exchanging data while synchronizing the synchronization data with the synchronization unit (counter unit 12, position control unit 13), or the unit to be synchronized, is performed in the synchronization cycle.

The synchronization cycle is periodically executed in the execution cycle of the synchronization interrupt task in the CPU unit 11. In the process of the synchronization cycle, the sharing and the update (data link) of the synchronization data are carried out. At such timing, the calculation and the input/output process of each synchronization unit is executed. The I/O refresh on the synchronization data with the synchronization unit is thereby completed. The process of the normal cycle is interrupted in the period in which the process of the synchronization cycle is executed. The execution cycle of the synchronization interrupt task is called the synchronization cycle time, where the I/O refresh of the most recent IO data is performed in the synchronization cycle time by the sharing of the synchronization data and the synchronization of the process of each unit performed in such constant cycle (e.g., 1 msec), and hence the CPU unit 11 and each synchronization unit 12, 13 can implement the control of a constant cycle without variation.

In the present embodiment, when receiving the synchronization data by collective addressing from the CPU unit, the synchronization unit that is set with the synchronization mode at the time of activation and that performs synchronization control recognizes that this is the start timing of the synchronization cycle and performs a control to start the synchronization cycle.

In a specific process executed in the synchronization cycle, the MPU 11a of the CPU unit 11 first interrupts the process of the normal cycle currently being executed and activates the Lv. 5 timer when receiving the Lv. 15 timer interruption (top priority process) for the synchronization cycle. In Fig. 2, the "CPU high function cyclic service" is interrupted, but the process to be interrupted may obviously differ depending on the occurrence timing of the timer interruption. Such interruption is only in the period when the actual process is being executed in the synchronization cycle described below, and the process of the normal cycle is executed in other periods.

The MPU 11a that received the Lv. 15 timer interruption first transmits the most recent IO data (synchronization data: command value with respect to each synchronization unit) stored in the data link of the CPU unit 11 in collective addressing to each synchronization unit 12, 13 using the system bus 10a, as the "synchronization process". The synchronization data to be transmitted by collective addressing is sent by collective addressing to all synchronization units, and thus are all (total) data required in each synchronization unit, and may include data not necessary in a certain synchronization unit. In the synchronization control of the present system, the CPU unit collects the synchronization data from each synchronization unit during the synchronization control cycle, and distributes by collective addressing to each synchronization unit at the time of the next synchronization control cycle after the synchronization interrupt task process described later, and thus information processed by the CPU unit in the synchronization control cycle of the previous time is received in the collective addressing transmission of this time when seen from each synchronization unit.

The synchronization unit that received the synchronization data by collective addressing starts the own synchronization control cycle at the relevant timing. In other words, since the frame for collective addressing flows on the system bus 10a, such frame is interpreted as the frame for collective addressing in the bus interfaces 12e, 13f of the synchronization unit on the reception side, and each interface interrupts the collective addressing reception with respect to each MPU 12a, 13a. With this as the trigger, the MPU 12a, 13a of the synchronization unit 12, 13 starts the synchronization cycle on the synchronization unit side. That is, the synchronization data sent in collective addressing is acquired. The acquired synchronization data is stored in the memory region in the work memory 12c assigned in advance. The output and the input process on the device connected to such synchronization unit are then executed. In the case of the present embodiment, the counter unit 12 retrieves the value counted by the counter 12d in the input process to the work memory 12c. In the case of the position control unit, the command value in the next cycle is sent to the servo driver 1 through the pulse generator 13e. Thereafter, the MPU 12a, 13a executes the refresh process of the synchronization data. Such synchronization data is handed over to the CPU unit by the data link method with the CPU unit. The synchronization data (feedback value (IN data) etc.) to be transmitted is thus stored in a predetermined address in a predetermined memory area (data link area) for the data link set in the synchronization unit in the refresh process of the synchronization data in advance.

Each synchronization unit 12 operates to complete the synchronization data refresh process by 1/4 of the synchronization cycle. After the synchronization data refresh process, the calculation process, the common process, the peripheral service, and the cyclic service are performed, and the reception of the synchronization data by the next collective addressing is then waited. The cyclic service includes an asynchronous data replacement process with the CPU unit for general data other than the synchronization data transmitted and received in the synchronization data refresh. The asynchronous data replacement process is the same as the prior art, and detailed description will be avoided, but is roughly implemented by being configured in the following manner. The shared memory with the CPU unit is arranged on the synchronization unit side, and an area for storing data to hand over from the synchronization unit to the CPU unit and an area for storing data to hand over from the CPU unit to the synchronization unit are provided in the shared memory. The synchronization unit reads and writes to the shared memory in the cyclic service of the synchronization unit, and the CPU unit reads and writes in the I/O refresh process of the normal cycle of the CPU unit (in the example of Fig. 2, corresponds to high function cyclic service since the synchronization unit assumes the high function I/O unit) to exchange data between the units. The execution timing of the cyclic service on the synchronization unit side and the execution timing of the I/O refresh process on the CPU unit side are not synchronized.

On the CPU unit 11 side, the interruption is stopped and the execution of the normal cycle is resumed after the execution of the "synchronization process". The CPU unit 11 generates a Lv.1 5 timer interruption for the synchronization cycle, and then generates the LV.5 timer interruption when 1.4 of the synchronization cycle time (e.g., 1 msec) has elapsed. In response to the timer interruption, the MPU 11a again interrupts the process of the normal cycle being executed, and executes the process of the synchronization cycle, that is, "synchronization data refresh process", "synchronization interrupt task process", and "synchronization preparation process", The "synchronization data refresh process" is a process in which the CPU unit acquires the synchronization data stored in the data link area of the synchronization unit in the synchronization data refresh process by the synchronization unit, and stores the synchronization data in the data link area of the CPU unit. The "synchronization interrupt task process" executes the synchronization interrupt program set in advance. The "synchronization interrupt task program is a program for obtaining the synchronization data (OUT data, command value) which is transmitted to each synchronization unit in the synchronization process of the next synchronization cycle based on the synchronization data (IN data) acquired in the synchronization data refresh process. The "synchronization process preparation process" is the preparation of transmitting to each synchronization unit in the synchronization process of the next synchronization cycle, and is a process of storing the synchronization data calculated by calculation executing the program in the corresponding region of the data link area. The CPU unit stops the interruption and resumes the normal cycle when the series of processes are executed.

In the present embodiment, the synchronization data refresh is performed at the time by the timer instead of waiting to accept the synchronization data refresh process complete notification of the synchronization unit after the synchronization process is performed, and thus the process of the normal cycle can be executed after the synchronization process is completed.

When receiving the Lv15. timer interruption to start synchronization cycle, the synchronization data stored in the synchronization process preparation is transmitted to each synchronization unit by collective addressing. The above processes are repeatedly performed, so that each synchronization unit can perform synchronization control at the same time as the start of the synchronization control cycle using the most recent synchronization data. Thus, an accurate synchronization control can be performed. The CPU unit and each synchronization unit thus share the most recent synchronization data, and operate. The CPU unit prevents shift by using the timer interrupt process of high interrupt prohibit level (maximum priority in the present embodiment) so that shift does not occur in the timing of collective addressing at a constant interval every cycle.

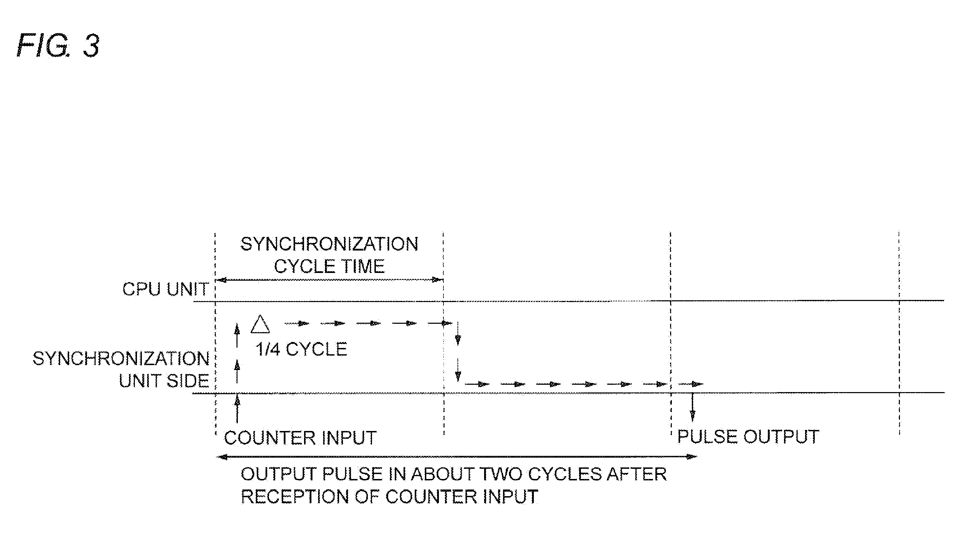

As shown in Fig. 3, the data (counter value) acquired by the synchronization unit (counter unit 12) is thereby transferred in the synchronization data refresh (IN) by the data link method to the CPU unit 1during the acquired synchronization cycle, and the command value (OUT data) based on the counter value is sent to the respective synchronization unit (position control unit 13) in the synchronization process of the next synchronization cycle and the pulse is output.

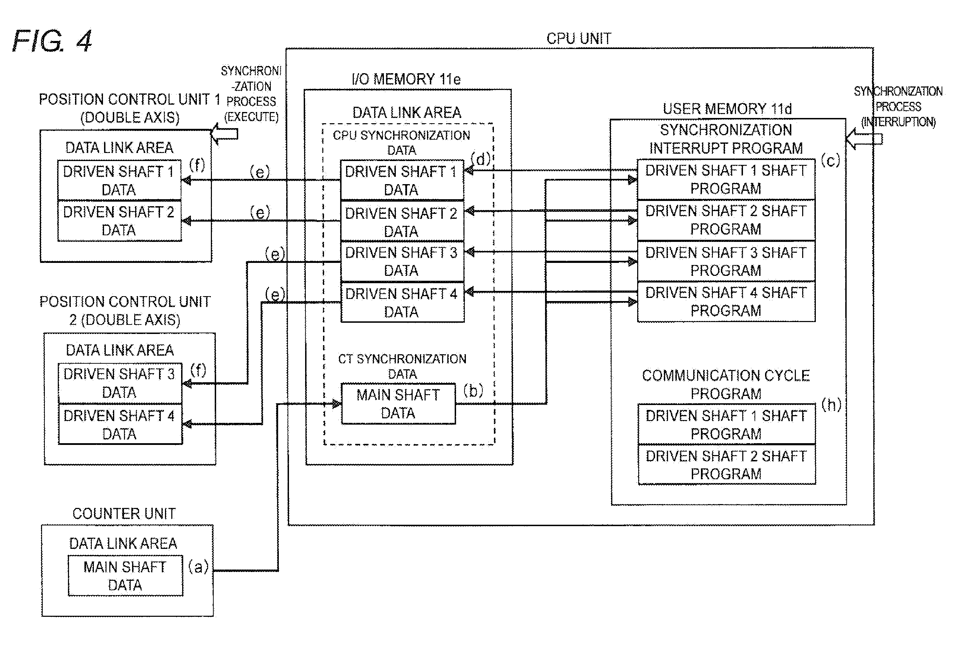

The operation of the synchronization control will now be described based on Fig. 4. In this example, an application where a plurality of driven shafts needs to operate in cooperation based on the position information of the main shaft is provided, and a counter unit 12 for detecting the position of the main shaft and the position control unit 13 for operating the main shaft and the driven shaft are arranged. Two position control units 13 connected with two driven shaft output devices (servo motor etc.) are arranged. Although not shown, the PLC also includes a unit for controlling the servo motor for driving the main shaft. The main shaft unit may be the same as or different from the driven shaft unit.

First, a certain synchronization cycle is executed, the main shaft data such as the position of the servo motor of the main shaft is acquired by the counter unit 12, and the main shaft data is stored in the data link area of the counter unit by the synchronization data refresh in the counter unit 12 ("a" in Figs. 2 and 4).

The main shaft data is stored at a predetermined position of the data link area of the CPU unit by the synchronization data refresh (IN) process of the CPU unit by the Lv.5 timer interruption ("b" in Figs. 2 and 4). The program for each driven shaft (driven shaft 1 shaft program to driven shaft 4 shaft program) is executed as the synchronization interrupt task process based on the stored main shaft data ("c" in Figs. 2 and 4). The "synchronization process preparation" is then executed, and the command value of each driven shaft (driven shaft 1 data to driven shaft 4 data) obtained through the execution of the program is stored in a predetermined area of the data link area of the CPU unit ("d" in Figs. 2 and 4).

Each stored driven shaft data is sent to each position control unit in collective addressing as synchronization data by the synchronization process based on the Lv.15 timer interruption ("e" in Figs. 2 and 4). Each position control unit receives the synchronization data, and stores the driven shaft data related to itself in the data link area of each position control unit defined in advance "f" in Figs. 2 and 4). Each driven shaft is controlled based on the operation of the main shaft (most recent data).

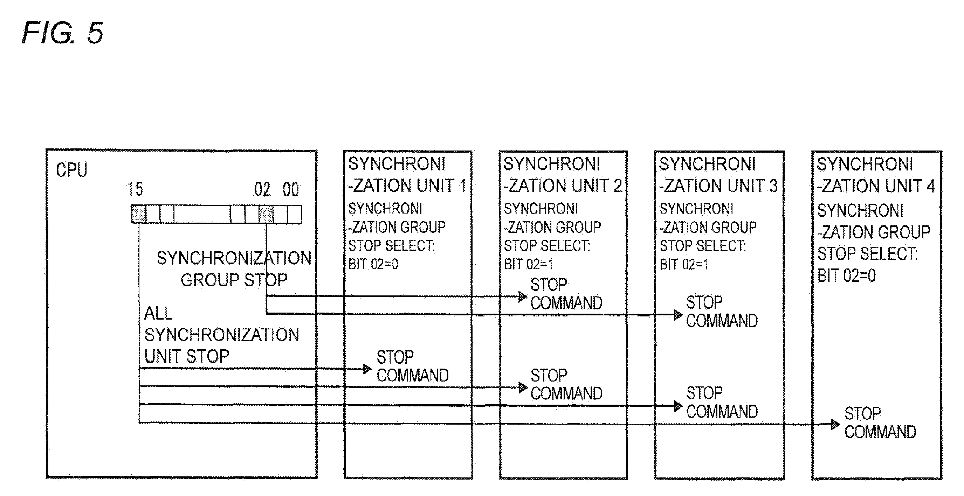

The stop function of the synchronization unit will now be described based on Fig. 5. In the present embodiment, the synchronization unit can switch between the synchronization mode of performing synchronization control and the asynchronous mode of not performing synchronization control. This switching is performed by the switching of the set switch, the setting to the internal memory using the setting tool device and the like, and confirms at which mode to operate in time of activation. If recognized that the synchronization mode is set at the time of activation, when accepting the interruption of collective addressing (receiving synchronization data), this causes the synchronization cycle to start. When operating in the synchronization mode, all synchronization units executing the inter-unit synchronization control or the synchronization units of an arbitrary combination have a function of stopping the function being executed. Specifically, a flag for notifying the presence of synchronization stop, as shown in Fig. 5, is also transmitted with the synchronization data transmitted by collective addressing. The flag includes all synchronization unit stop for giving a stop command to all synchronization units, and a synchronization group stop for giving a stop command to the units of a combination set in advance. The predetermined address of the data link area of the CPU unit is the area for notifying the stop command. In Fig. 5, an area of 15 bits is ensured, and the 15^{th} bit of the area becomes the all synchronization unit stop relay, which relay is turned ON to collectively give a command for stopping the operation being executed to all synchronization units. The 00 to 14 bits of the area are synchronization group stop relay. When such relay is turned ON, a command for stopping the operation being executed is given to the synchronization unit in which the bit corresponding to the synchronization group stop selection parameter on the synchronization unit side is selected. In the figure, when the "02" bit is turned ON, the synchronization control of the synchronization units 2, 3 associated in advance are stopped. In this case, the synchronization units 1, 4 thereafter continue the synchronization control.

Therefore, the synchronization control on some or all synchronization units can be stopped by the notification from the CPU unit even after the activation. The stop is canceled and the synchronization control is again started by turning OFF the corresponding bit thereafter.

## Claims

1. An industrial controller configured with a plurality of units for performing synchronization control, wherein
one of the plurality of units is configured to perform as a cycle master for performing a control to match an execution timing of the synchronization;
the cycle master has a function of executing,
a process of transmitting synchronization data by collective addressing using a system bus used in message transmission and IO) data transmission to the other units performing the synchronization control according to a timer interruption, apart from a process performed in a normal cyclic, and
a preparation process for next collective addressing after acquiring the synchronization data of IN data of the other units and executing an interrupt task process based on the synchronization data; and
the other units performing the synchronization control are configured to execute a synchronization cycle upon the reception of the synchronization data by collective addressing transmitted from the cycle master as a trigger, acquire the transmitted synchronization data with the start of the synchronization cycle, perform a refresh process of the synchronization data of the IN data after executing an input/output process, perform a calculation process based on the received synchronization data, and output the calculation process result after the reception of the synchronization data by the next collective addressing.

2. The industrial controller according to claim 1, wherein the cycle master is configured to resume the process performed in the normal cyclic after the process of transmitting the synchronization data by collective addressing, and execute a process of acquiring the synchronization data of the IN data by an interrupt process performed when a reference time, which is set to be greater than or equal to a time period required from the start of the synchronization cycle to the synchronization data refresh process by the other units performing the synchronization control, has elapsed after receiving the timer interruption.

3. The industrial controller according to claim 1 or 2, wherein
the synchronization data to be transmitted by the cycle master includes OUT data as a command value; and
the interrupt process based on the acquired synchronization data includes a calculation of the command value based on the synchronization data of the acquired IN data.

4. The industrial controller according to claim 1, wherein the synchronization control include controlling the operation of one or more driven shafts in accordance with the operation of a main shaft.

5. The industrial controller according to claim 1, wherein the cycle, master is a CPU unit for comprehensively controlling the entire industrial controller.

6. The industrial controller according to claim 1, wherein
the cycle master has a function of sending a synchronization stop command along with the synchronization data by collective addressing; and
the other units stop the synchronization control when receiving the synchronization stop command.
